Europäisches Patentamt

European Patent Office

Office européen des brevets

(11) EP 0 833 138 B1

(19)

(12) **FASCICULE DE BREVET EUROPEEN**

(45) Date de publication et mention
de la délivrance du brevet:
**19.03.2003 Bulletin 2003/12**

(51) Int Cl.⁷: **G01L 3/24**, G01B 3/24

(21) Numéro de dépôt: **97402138.8**

(22) Date de dépôt: **15.09.1997**

(54) **Dispositif de détermination du type d'un équipement en rotation, sytème de surveillance et de régulation d'un centrifugeur**

Vorrichtung zur Feststellung des Types einer Ausrüstung in Rotation, Überwachungssystem und Parameterregulierung einer assozierten Zentrifuge

Device for determining the type of a rotating equipment, control and regulation system for an associated centrifuge

(84) Etats contractants désignés:
**AT BE CH DE DK ES FI FR GB GR IE IT LI LU NL PT SE**

(30) Priorité: **27.09.1996 FR 9611822**

(43) Date de publication de la demande:
**01.04.1998 Bulletin 1998/14**

(73) Titulaire: **Jouan**
**44800 Saint Herblain (FR)**

(72) Inventeur: **Pouvreau Michel**
**44160 Pontchateau (FR)**

(74) Mandataire: **Moncheny, Michel et al**
**c/o Cabinet Lavoix**
**2 Place d'Estienne d'Orves**
**75441 Paris Cedex 09 (FR)**

(56) Documents cités:
**EP-A- 0 645 879          JP-A- 55 087 018**
**JP-A- 58 003 591          US-A- 4 461 957**
**US-A- 4 818 927          US-A- 4 822 331**
**US-A- 5 459 387**

- **PATENT ABSTRACTS OF JAPAN vol. 012, no. 327 (P-753), 6 septembre 1988 & JP 63 088416 A (MATSUSHITA ELECTRIC IND CO LTD), 19 avril 1988,**
- **PATENT ABSTRACTS OF JAPAN vol. 007, no. 076 (E-167), 30 mars 1983 & JP 58 003592 A (MITSUBISHI DENKI KK), 10 janvier 1983,**
- **PATENT ABSTRACTS OF JAPAN vol. 095, no. 010, 30 novembre 1995 & JP 07 167287 A (UNISIA JECS CORP), 4 juillet 1995,**
- **PATENT ABSTRACTS OF JAPAN vol. 007, no. 076 (E-167), 30 mars 1983 & JP 58 003593 A (MITSUBISHI DENKI KK), 10 janvier 1983,**
- **PATENT ABSTRACTS OF JAPAN vol. 017, no. 280 (P-1547), 28 mai 1993 & JP 05 012155 A (TOSHIBA CORP), 22 janvier 1993,**

## Description

La présente invention est relative à un dispositif de détermination du type d'un équipement selon le préambule de la revendication 1. L'invention s'applique eu particulier à l'identification du type d'un équipement équipant un centrifugeur.

Dans l'état de la technique, la determination du type d'un équipement entraîné en rotation est basée sur le calcul du moment d'inertie de l'équipement et nécessite ainsi l'utilisation de capteurs spécifiques et d'une unité de calcul complexe.

Par ailleurs, JP-A-58 003 591 et JP-A-55 087 018 décrivent des dispositifs de détermination du couple fourni par des moteurs à induction à partir de leur glissement.

US-4 461,957 décrit un générateur électrique dont le fonctionnement est piloté en utilisant le calcul d'une valeur de glissement.

Le but de l'invention est de fournir un dispositif selon le préambule de la revendication 1, qui soit de structure simple et ne nécessite pas de prévoir de capteurs spécifiques et d'unité de calcul complexe.

Un autre but de l'invention est de fournir un système de contrôle ou de régulation de paramètres de fonctionnement d'un centrifugeur à partir de la connaissance du type d'équipement entraîné par le moteur.

Elle a donc pour objet un dispositif de détermination du type d'un équipement selon la revendication 1.

Les revendications dependantes 2 à 4 concernent des modes particuliers de réalisition.

L'invention a également pour objet un système de surveillance du fonctionnement d'un centrifugeur selon la revendication 5.

La revendication 6 concerne un mode de réalisation particulier de ce système.

L'invention a également pour objet un système de contrôle de paramètres de fonctionnement d'un centrifugeur selon la revendication 7.

D'autres caractéristiques et avantages de l'invention ressortiront de la description suivante, donnée uniquement à titre d'exemple et faite en référence aux dessins annexés sur lesquels:

- la figure 1 illustre de façon schématique la structure générale d'un dispositif de détermination du type d'un équipement selon l'invention;
- la figure 2 est une courbe montrant le couple moteur ainsi que le couple résistant de différents types de rotors pour une vitesse de synchronisme donnée du moteur;
- la figure 3 est une vue schématique d'un centrifugeur équipé d'un système de surveillance du fonctionnement du moteur électrique du centrifugeur et d'un système de régulation de ses paramètres de fonctionnement ; et
- la figure 4 est une courbe montrant la variation du glissement g en fonction de la température pour une

vitesse de synchronisme $N_s$ donnée.

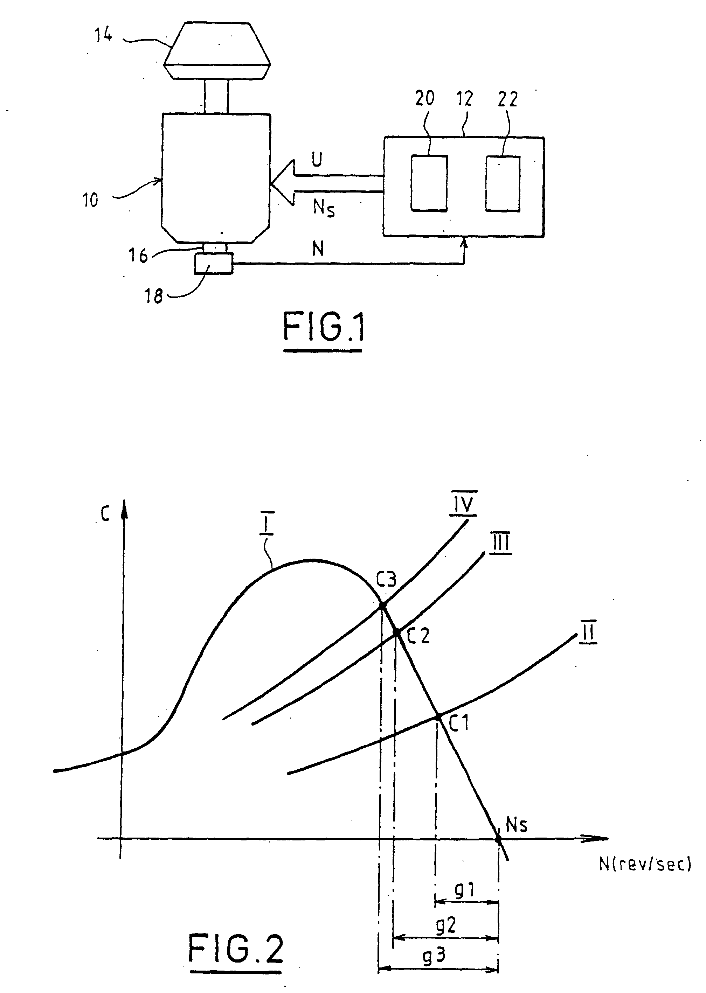

Sur la figure 1, on a représenté un moteur 10 piloté par une unité de commande 12 délivrant au moteur 10 une tension alternative U d'alimentation.

Le moteur 10 est un moteur électrique asynchrone triphasé entraînant en rotation un équipement 14 monté sur l'arbre 16 du moteur.

De façon connue, la vitesse de rotation du champ magnétique créé par la tension d'alimentation U, connue également sous l'appellation vitesse de synchronisme $N_s$ du moteur 10, est liée à la valeur de la fréquence f de la tension U par la relation:

$$N_s = \frac{f}{P} \qquad (1)$$

dans laquelle P désigne le nombre de paires de pôles du moteur.

Ainsi, l'unité de commande 12 assure le réglage de la vitesse de rotation du moteur 10 au moyen du réglage de la fréquence f de la tension d'alimentation U. Par exemple, pour un moteur asynchrone possédant une paire de pôles et pour une fréquence égale à 50 Hz, la vitesse de synchronisme $N_s$ du moteur est égale à 50 tours par seconde, soit 3000 tours par minute.

L'équipement 14 tourne à une vitesse de rotation N inférieure à la vitesse de synchronisme $N_s$ du champ magnétique tournant.

L'écart entre la vitesse de rotation N du moteur et la vitesse de synchronisme $N_s$ est définie par le glissement g du moteur selon la relation:

$$g = \frac{N_s - N}{N_s} \qquad (2)$$

On conçoit que le glissement g étant représenté, pour une vitesse de synchronisme $N_s$ donnée, par la différence entre la vitesse de synchronisme $N_s$ et la vitesse de rotation du moteur N, il varie en fonction de la vitesse de rotation N du moteur.

Toutefois, d'autres paramètres de fonctionnement du moteur 10 peuvent influer sur la valeur du glissement g. En effet, le glissement g varie en fonction de la tension d'alimentation U délivré par l'unité de commande 12, des caractéristiques de construction du moteur et du couple résistant.

Ainsi, pour un même moteur et pour une même tension U d'alimentation, le glissement g est proportionnel à la valeur du couple résistant de l'équipement 14.

On a représenté sur la figure 2 le couple moteur (courbe I), ainsi que le couple résistant de l'équipement 14 pour une vitesse de synchronisme $N_s$ donnée du moteur, pour différents types d'équipement (courbes II, III et IV). On voit sur ces courbes que pour une même valeur de vitesse de synchronisme $N_s$ on obtient, pour différentes valeurs C1, C2 et C3 du couple résistant de l'équipement 14 différentes valeurs respectives g1, g2 et g3 du glissement.

Le moteur 10 pouvant être équipé d'un équipement 14 choisi parmi un ensemble d'équipements ayant chacun une valeur de couple résistant C, il est ainsi possible, à partir de la connaissance du glissement g du moteur 10 pour un équipement 14 particulier de connaître le couple résistant C de cet équipement et donc le type auquel il appartient.

Pour ce faire, le dispositif représenté sur la figuré 1 comporte un organe 18 de mesure de la vitesse de rotation de l'équipement 14 fixé sur l'arbre 16 du moteur et délivrant à l'unité de commande 12 la valeur réelle de la vitesse de rotation N du moteur 10.

L'organe 18 de mesure est constitué par tous types de capteurs appropriés pour l'utilisation envisagée, par exemple un tachymètre, un organe de mesure de vitesse de type magnétique ou à effet hall, ou encore un disque à encoches associé à une source lumineuse et à un récepteur photoélectrique délivrant à l'unité de commande 12 des impulsions électriques dont la fréquence varie en fonction de la vitesse de rotation N du moteur, ou par tout autre type de moyens de mesure.

Par ailleurs, l'unité de commande 12 comporte un calculateur 20 assurant le calcul, selon la relation (1) mentionnée précédemment, de la vitesse de synchronisme $N_s$ du moteur, ainsi que le calcul de la valeur d'une caractéristique représentative du glissement g.

Cette caractéristique représentative de glissement du moteur est calculée à partir de la comparaison de la valeur calculée de la vitesse de synchronisme $N_s$ et de la vitesse de rotation réelle N du moteur 10 délivrée par l'organe de mesure 18.

Par ailleurs, l'unité de commande 12 comporte une mémoire 22 dans laquelle sont stockées un ensemble de valeurs de glissement correspondant chacune à une valeur de couple résistant et obtenues préalablement de façon expérimentale en équipant un moteur asynchrone triphasé de même type que le moteur 10 avec différents types de l'équipement 14 ayant chacun une valeur prédéfinie de couple résistant et en déterminant le glissement g correspondant du moteur pour chaque équipement.

L'unité de commande 12 effectue alors, à l'aide d'un comparateur déposé dans le calculateur 20, la comparaison entre la valeur de la caractéristique représentative du glissement g calculée et les valeurs de glissement mémorisées dans la mémoire 22, permettant ainsi la détermination de la valeur du couple résistant du rotor 14 et par conséquent du type de rotor monté sur l'arbre 16.

Pour déterminer le type du rotor 14, l'unité de commande 12 compare la valeur du couple résistant identifié avec un ensemble de valeurs de couple résistant stockée dans l'unité de commande 12.

Comme cela a été mentionné précédemment, ce dispositif d'identification du couple résistant peut être utilisé pour la détermination du type d'équipement équipant un centrifugeur en vue d'assurer le déroulement d'un cycle de centrifugation en toute sécurité ainsi que l'adaptation des paramètres de régulation du fonctionnement du centrifugeur.

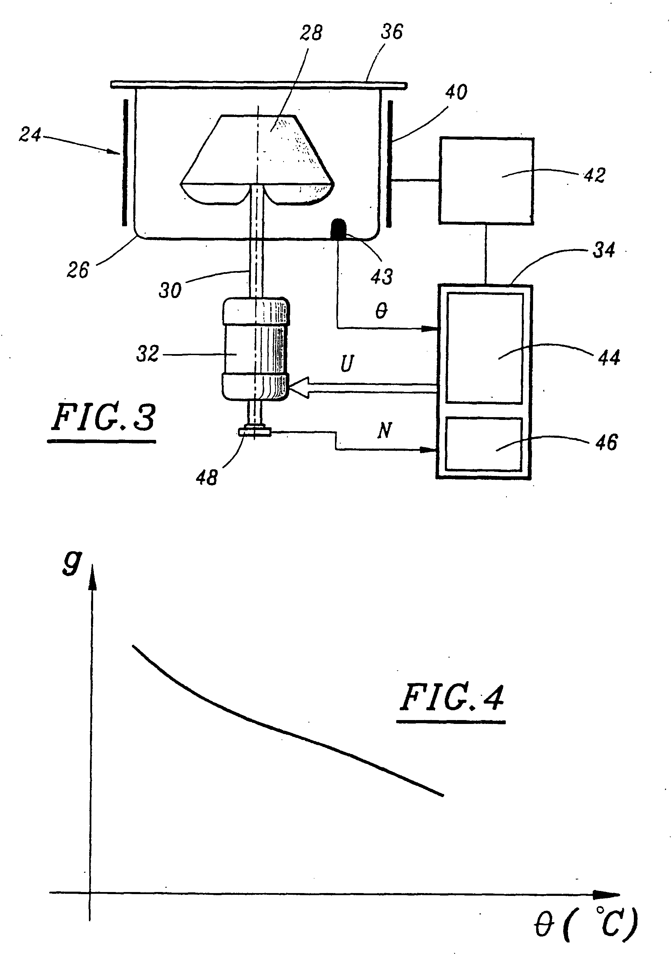

Sur la figure 3, on a représenté de façon schématique un centrifugeur équipé d'un tel dispositif.

On voit sur cette figure 3 que le centrifugeur, désigné par la référence numérique générale 24, comporte une chambre 26 dans laquelle est placé un rotor 28 monté sur l'arbre 30 d'un moteur électrique asynchrone 32 piloté par une unité de commande 34 de son alimentation.

Le rotor 28 comporte de façon connue des moyens de réception de tubes contenant des échantillons à centrifuger, non représentés. Un couvercle 36 est fixé de façon amovible sur la chambre 26, pour permettre le chargement et le déchargement du rotor 28.

Par ailleurs, la chambre 26 comporte des moyens de réfrigération 40, de type classique, adaptés pour refroidir la chambre 26 sous la commande de l'unité de commande 34, par l'intermédiaire d'un régulateur 42 de type classique, à coefficient proportionnel, proportionnel-intégral ou intégral.

La chambre 26 est en outre munie d'un capteur 43 de la température θ de l'air présent dans celle-ci relié à l'unité de commande 34.

L'unité de commande 34 est équipée d'un dispositif d'identification du couple résistant du rotor 28 comportant un calculateur 44 et une mémoire 46 et permettant, comme mentionné précédemment d'identifier le couple résistant du rotor monté sur l'arbre 30, par comparaison de la valeur représentative du glissement calculée par l'unité de commande 34 avec un ensemble de valeurs de glissement mémorisées dans la mémoire 46 et obtenues préalablement de façon expérimentale pour des valeurs de couple résistant correspondantes.

Le couple résistant ainsi identifié permet dès lors la détermination du type de rotor auquel appartient le rotor monté sur l'arbre 30.

Par ailleurs, la valeur du glissement g du rotor étant, de façon connue, une grandeur dépendante de la température de l'air au voisinage du rotor, la valeur de la température délivrée par le capteur 43 permet d'augmenter la précision de la détermination du couple résistant du rotor.

Il est ainsi possible, dans le cas où le glissement identifié correspond à plusieurs valeurs de couple résistant, d'assurer une discrimination entre les types de rotors identifiés, au moyen de la température mesurée de l'air et d'un algorithme approprié.

Pour ce faire, les valeurs de glissement mémorisées dans la mémoire 46 sont, selon un mode de réalisation particulier, des valeurs qui varient en fonction de la température θ de la chambre 26, selon la courbe représentée sur la figure 4.

On conçoit donc que le centrifugeur est capable, à partir de la mesure de la vitesse de rotation du moteur 32 délivrée à l'unité de commande 34 par un capteur 48 spécifique, d'assurer la surveillance du type de rotor monté sur l'arbre 30.

Ainsi, si par une erreur de programmation de l'unité de commande 34 celle-ci a enregistré un ordre d'entraîner un rotor 28 à une vitesse de rotation supérieure à la vitesse maximale admissible pour ce rotor ou pour le centrifugeur lui-même, l'unité de commande 34 peut détecter l'incompatibilité entre le rotor 28 et la vitesse programmée par l'opérateur et émet dans ce cas une alarme, à l'aide de technique connue, identifiant ainsi à l'opérateur l'incompatibilité détectée.

En outre, afin de ne pas altérer le rotor 28 et le centrifugeur, l'unité de commande 34 règle la fréquence f de la tension d'alimentation U du moteur 32 à la valeur maximale de la vitesse de rotation admissible pour le rotor 28 et le centrifugeur.

Par ailleurs, comme mentionné précédemment, la température de la chambre 26 est régulée sous la commande de l'unité de commande 34, afin de maintenir constante la température dans la chambre 26 quels que soient les frottements engendrés par la rotation du rotor 28 et qui tendent à augmenter la température à l'intérieur de la chambre 26.

Pour ce faire, le capteur de température 43 délivre à l'unité de commande 34 des valeurs de mesure de la température de la chambre 26 en vue d'effectuer une régulation de cette température, par des techniques de régulation connues en elles-mêmes.

Toutefois, chaque type de rotor présente un comportement thermique spécifique, de sorte qu'il est nécessaire d'adapter la régulation de la température au type de rotor monté sur l'arbre 30.

Pour permettre une régulation de température efficace, en fonction des caractéristiques mécaniques du rotor monté sur l'arbre 30, l'unité centrale de commande 34 comporte dans sa mémoire 46, associées aux valeurs de couple résistant correspondant chacune à un type de rotor, un ensemble de valeurs prédéterminées de paramètre de régulation de température correspondant chacune à un type de rotor et destinées au régulateur 42. Comme précédemment, ces paramètres de régulation de température sont obtenus de façon préalable à l'aide de résultats expérimentaux permettant en outre de déterminer pour chaque type de rotor susceptibles d'être montés sur l'arbre 30, le réchauffement engendré pour différentes valeurs de vitesse de rotation.

Ainsi, l'unité de commande 34 peut alors, à partir de l'identification du rotor, déterminer les paramètres optimum de régulation du centrifugeur et fournir au régulateur 42 les valeurs de ces paramètres pour l'ajustement de la température de la chambre 26.

De même, la régulation de vitesse peut bénéficier du même système d'adaptation de ses paramètres de régulation dès lors que le rotor 28 aura été identifié par l'unité de commande 34.

On conçoit donc que le centrifugeur, équipé d'un tel système permet, d'une part, de reconnaître le type de rotor équipant le moteur afin d'éviter que celui-ci ne tourne à une vitesse supérieure à celle qu'il ou que le centrifugeur est capable de supporter et, d'autre part, d'ajuster les paramètres de régulation du fonctionnement du centrifugeur en fonction du type de rotor et de la vitesse de rotation du moteur.

**Revendications**

1. Dispositif de détermination du type d'un équipement (14;28) entraîné en rotation associé à un moteur électrique asynchrone (10;32) piloté par une unité de commande (12;34) délivrant audit moteur (10;32) une tension alternative (U) d'alimentation et de commande de la vitesse de rotation dudit moteur (10;32), **caractérisé en ce qu'**il comporte des moyens de mesure (18;48) de la vitesse de rotation dudit moteur (10;32), des moyens de calcul (20;44) d'une caractéristique représentative du glissement du moteur et, associés auxdits moyens de calcul (20;44), des moyens de comparaison de la valeur calculée de ladite caractéristique et d'un ensemble de valeurs de glissement prédéterminées, lesquelles valeurs prédéterminées sont stockées dans une mémoire (22;46) associée auxdits moyens de comparaison et correspondent chacune à une valeur d'un couple résistant, en vue de l'identification du couple résistant dudit équipement (14;28), et des moyens de comparaison de la valeur identifiée du couple résistant avec un ensemble de valeurs de couple résistant stockées dans une mémoire associée auxdits moyens de comparaison en vue de la détermination du type de l'équipement entraîné en rotation.

2. Dispositif selon la revendication 1, **caractérisé en ce que** lesdits moyens de calcul (20;44) de la caractéristique représentative du glissement du moteur (10 ; 32) comportent des moyens de comparaison de la vitesse de synchronisme du champ magnétique engendré par la tension d'alimentation et de la vitesse de rotation mesurée dudit moteur (10 ; 32).

3. Dispositif selon l'une des revendications 1 et 2, **caractérisé en ce que** ladite caractéristique représentative du glissement étant une caractéristique dépendante de la température, il comporte en outre des moyens de mesure de température de l'air au voisinage de l'équipement en vue de l'augmentation de la précision de l'identification du couple résistant.

4. Dispositif selon l'une quelconque des revendications 1 à 3, **caractérisé en ce que** ledit équipement entraîné en rotation est constitué par le rotor (28) d'un centrifugeur (24).

**5.** Système de surveillance du fonctionnement d'un centrifugeur comprenant un moteur électrique asynchrone (10;32) piloté par une unité de commande (12;34) délivrant audit moteur une tension alternative (U) d'alimentation et de commande de la vitesse de rotation dudit moteur (10;32), **caractérisé en ce que** l'unité de commande (12;34) comporte un dispositif de détermination du type de l'équipement entraîné en rotation selon l'une quelconque des revendications 1 à 4, les valeurs de couple résistant stockées dans ladite unité de commande (1) correspondent chacune au couple résistant d'un equipement que le moteur est autorisé à entraîner à une vitesse de rotation déterminée, en vue de la surveillance de la compatibilité entre l'équipement (14;28) entraîné en rotation et le centrifugeur (10;32).

**6.** Système de surveillance selon la revendication 5, **caractérisé en ce que** l'unité de commande (12; 34) comporte des moyens de limitation de la vitesse de rotation dudit équipement adaptés pour limiter la vitesse de rotation dudit équipement à une valeur maximale autorisée de la vitesse de rotation dudit équipement (14; 28).

**7.** Système de contrôle de paramètres de fonctionnement d'un centrifugeur (24) du type comportant un moteur électrique asynchrone (32) piloté par une unité de commande (34) délivrant audit moteur (32) une tension d'alimentation (U) et de commande de la vitesse de rotation dudit moteur (32) et entraînant en rotation un rotor (28) disposé dans une chambre (26) et des moyens de régulation (34;46) de paramètres de fonctionnement dudit centrifugeur (24), **caractérisé en ce qu'**il comporte un dispositif de détermination du type de l'équipement entrainé en retation selon la revendication 4, **en ce que** l'unité de commande comprend la mémoire (46) de stockage des valeurs de couple résistant, **en ce que** les valeurs de couple résistant stockées, qui correspondent chacune à un type de rotor (28), sont associées chacune à un ensemble de paramètres de régulation du fonctionnement dudit centrifugeur (34) correspondant audit type de rotor (28), et **en ce que** le dispositif de détermination est adapté pour délivrer aux moyens de régulation les valeurs des paramètres de régulation correspondant au type du rotor (28) déterminé.

## Claims

**1.** A device for determining the type of rotated apparatus (14; 28) associated with an asynchronous electric motor (10; 32) master-controlled by a control unit (12; 34) delivering to the said motor (10; 32) an alternating voltage (U) to supply and to control the speed of rotation of the said motor (10; 32), **characterised in that** it comprises means (18; 48) for measuring the speed of rotation of the said motor (10; 32), means (20; 44) for calculating a characteristic representative of the slippage of the motor and, associated with the said calculating means (20; 44), means for comparing the calculated value of the said characteristic with a group of predetermined slippage values, these predetermined values being stored in a memory (22; 46) associated with the said comparing means and each corresponding to a load-moment value, for the purpose of identifying the load moment of the said apparatus (14; 28), and means for comparing the identified value of the load moment with a group of load-moment values stored in a memory associated with the said comparing means for the purpose of determining the type of rotated apparatus.

**2.** A device according to Claim 1, **characterised in that** the said means (20; 44) for calculating the characteristic representative of the slippage of the motor (10; 32) comprise means for comparing the speed of synchronism of the magnetic field generated by the supply voltage with the measured speed of rotation of the said motor (10; 32).

**3.** A device according to one of Claims 1 and 2, **characterised in that**, the said characteristic representative of the slippage being a temperature-dependent characteristic, it furthermore comprises means for measuring the air temperature in the vicinity of the apparatus for the purpose of increasing the precision of identification of the load moment.

**4.** A device according to any one of Claims 1 to 3, **characterised in that** the said rotated apparatus is constituted by the rotor (28) of a centrifuge (24).

**5.** A system of monitoring the operation of a centrifuge comprising an asynchronous electric motor (10; 32) master-controlled by a control unit (12; 34) delivering to the said motor an alternating voltage (U) to supply and to control the speed of rotation of the said motor (10; 32), **characterised in that** the control unit (12; 34) comprises a device for determining the type of rotated apparatus according to any one of Claims 1 to 4, the stored load-moment values for controlling the type of the rotated apparatus each correspond to the load moment of an apparatus which the motor is permitted to rotate at a predetermined speed, for the purpose of monitoring the compatibility between the rotated apparatus (14; 28) and the centrifuge (10; 32).

**6.** A monitoring system according to Claim 5, **characterised in that** the control unit (12; 34) comprises means for limiting the speed of rotation of the said apparatus that are adapted for limiting the speed of rotation of the said apparatus to a maximum permitted value of the speed of rotation of the said apparatus (14; 28).

7. A system for controlling operating parameters of a centrifuge (24) of the type comprising an asynchronous electric motor (32) master-controlled by a control unit (34) delivering to the said motor (32) a voltage (U) to supply and to control the speed of rotation of the said motor (32) and rotating a rotor (28) positioned in a chamber (26) and means (34; 46) for regulating operating parameters of the said centrifuge (24), **characterised in that** it comprises a device for determining the type of rotated apparatus according to Claim 4, **in that** the control unit includes the memory (46) for storing load-moment values, **in that** the stored load-moment values, which each correspond to a type of rotor (28), are each associated with a group of parameters for regulating the operation of the said centrifuge (34) corresponding to the type of rotor (28), and **in that** the determining device is adapted for delivering to the regulating means the regulation-parameter values corresponding to the type of rotor (28) determined.

**Patentansprüche**

1. Vorrichtung zur Bestimmung des Typs einer in Drehung versetzten Einrichtung (14; 28), die einem Asynchron-Elektromotor (10; 32) zugeordnet ist, der durch eine Steuereinheit (12; 34) gesteuert wird, die dem Motor (10; 32) eine Wechselspannung (U) zur Versorgung und zur Steuerung der Drehgeschwindigkeit des Motors (10; 32) liefert, **dadurch gekennzeichnet, daß** sie folgendes aufweist: Mittel (18; 48) zum Messen der Drehgeschwindigkeit des Motors (10; 32), Mittel (20; 44) zum Berechnen eines für den Schlupf des Motors repräsentativen Merkmals und diesen Rechenmitteln (20; 44) zugeordnete Mittel zum Vergleichen des errechneten Werts dieses Merkmals und einer Anzahl von zuvor bestimmten Schlupfwerten, wobei diese zuvor bestimmten Werte in einem den Vergleichsmitteln zugeordneten Speicher (22; 46) gespeichert sind und jeweils einem Wert eines Widerstandsmoments entsprechen, zum Zweck der Identifizierung des Widerstandsmoments dieser Einrichtung (14; 28), und Mittel zum Vergleichen des identifizierten Werts des Widerstandsmoments mit einer Anzahl von Widerstandsmomentswerten, die in einem den Vergleichsmitteln zugeordneten Speicher gespeichert sind, zum Zweck der Bestimmung des Typs der in Drehung versetzten Einrichtung.

2. Vorrichtung nach Anspruch 1, **dadurch gekenn-**

**zeichnet, daß** die Mittel (20; 44) zur Berechnung des für den Schlupf des Motors (10; 32) repräsentativen Merkmals Mittel zum Vergleichen der Synchrongeschwindigkeit des durch die Versorgungsspannung erzeugten Magnetfelds und der gemessenen Drehgeschwindigkeit des Motors (10; 32) aufweisen.

3. Vorrichtung nach einem der Ansprüche 1 und 2, **dadurch gekennzeichnet, daß** dieses für den Schlupf repräsentative Merkmal ein von der Temperatur abhängiges Merkmal ist und daß sie zur Erhöhung der Genauigkeit der Identifizierung des Widerstandsmoments außerdem Mittel zum Messen der Temperatur der Luft in Nähe der Einrichtung umfaßt.

4. Vorrichtung nach einem der Ansprüche 1 bis 3, **dadurch gekennzeichnet, daß** die in Drehung versetzte Einrichtung aus dem Rotor (28) einer Zentrifuge (24) besteht.

5. System zur Überwachung des Betriebs einer Zentrifuge, umfassend einen Asynchron-Elektromotor (10; 32), der durch eine Steuereinheit (12; 34) gesteuert wird, die dem Motor eine Wechselspannung (U) zur Versorgung und zur Steuerung der Drehgeschwindigkeit des Motors (10; 32) liefert, **dadurch gekennzeichnet, daß** die Steuereinheit (12; 34) eine Vorrichtung zur Bestimmung des Typs der in Drehung versetzten Einrichtung nach einem der Ansprüche 1 bis 4 umfasst, wobei die in der Steuereinheit gespeicherten Widerstandsmomentwerte jeweils dem Widerstandmoment einer Einrichtung entsprechen, die der Motor mit einer bestimmten Drehgeschwindigkeit antreiben darf, zum Zweck der Überwachung der Kompatibilität zwischen der in Drehung versetzten Einrichtung (14; 28) und der Zentrifuge (10; 32).

6. Überwachungssystem nach Anspruch 5, **dadurch gekennzeichnet, daß** die Steuereinheit (12; 34) Mittel zur Begrenzung der Drehgeschwindigkeit der Einrichtung aufweist, die dafür ausgelegt sind, die Drehgeschwindigkeit dieser Einrichtung auf einen zugelassenen Höchstwert der Drehgeschwindigkeit der Einrichtung (14; 28) zu begrenzen.

7. System zur Steuerung der Betriebsparameter einer Zentrifuge (24), umfassend einen Asynchron-Elektromotor (32), der durch eine Steuereinheit (34) gesteuert wird, die dem Motor (32) eine Spannung (U) zur Versorgung und zur Steuerung der Drehgeschwindigkeit des Motors (32) liefert, und der einen in einer Kammer (26) angeordneten Rotor (28) in Drehung versetzt, und Mittel (34; 46) zur Regulierung von Betriebsparametern der Zentrifuge (24), **dadurch gekennzeichnet, daß** es eine Vorrichtung zur Bestimmung des Typs der in Drehung versetzten Einrichtung nach Anspruch 4 aufweist, daß die Steuereinheit den Speicher (46) zur Speicherung der Widerstandsmomentwerte umfaßt, daß die gespeicherten Widerstandsmomentwerte, die jeweils einem Rotortyp (28) entsprechen, jeweils einer Anzahl von diesem Typ von Rotor (28) entsprechenden Parametern zur Regulierung des Betriebs der Zentrifuge (34) zugeordnet sind, und daß die Bestimmungsvorrichtung dafür ausgelegt ist, den Regulierungsmitteln die Werte der Regulierungsparameter zu liefern, die dem bestimmten Typ des Rotors (28) entsprechen.

FIG.1

FIG.2

_FIG.3_

_FIG.4_